# EUROPEAN PATENT APPLICATION

(11) **EP 2 003 831 A1**
(43) Date of publication of application: **17.12.2008**
(21) Application number: 07011359.2
(22) Date of filing: 11.06.2007
(51) Int. Cl.: H04L 12/58, G06Q 10/00

(54) **Network service for user-controlled allocation of data items**

(71) Applicant: Koninklijke KPN N.V., 2516 CK The Hague (NL)
(72) Inventor: Van Steenbergen, Ate Sander, 9737 NN Groningen (NL); Alberts, Albert Willem, 9745 DH Groningen (NL); Bresser, Adrianus Johannes Antonius, 3824 BR Amersfoort (NL)
(74) Representative: Wuyts, Koenraad Maria

(57) **Abstract**

A network service processes an electronic data item, addressed to a user, under control of rules specified by the user. The service is configured to process the item regardless of the software application used by the supplier of the item to deliver the item.

## Description

### FIELD OF THE INVENTION

The invention relates to a method, to software and to a data processing system for processing a data item, for example, a message (e.g., e-mail, SMS, IM, etc.), part of a message (e.g., text body, URL in text, etc.), an electronic file (e.g., XML, picture, video clip, etc.) attached to the message, addressed to a user.

### BACKGROUND ART

Known e-mail applications let the user configure in advance the processing of incoming e-mails. The processing makes use of so-called filters to organize the processing according to pre-determined criterions. In this way, the user can have e-mails that comply with a specific criterion automatically be delivered to a certain file folder within his/her e-mail program, automatically be forwarded to another recipient, automatically be deleted, etc.

### SUMMARY OF THE INVENTION

The known e-mail software applications are configured to process the e-mails completely within their own applications framework. The inventor has realized that upon receipt of different data items of electronic content information delivered via different software applications, a user has to manually select for each data item the destination software application to which to send the data item or via which to store the data item or through which to process the item. That is, the inventor has realized that there does not exist a generic umbrella software application, data processing system or service that lets the user focus on the content of the items and specify how the items be processed, rather than have to restrict the processing of the items to options that depend on the way the items have been delivered (i.e., that depend on the software applications used for the delivery).

Therefore the inventor proposes a method of automatically processing a data item. The method comprises: receiving the item from a first software application via a first data network; identifying an attribute of the item; based on the attribute identified, selecting a rule from a rule base; and electronically processing the item according to the rule selected and independently of the first software application. The processing according to the selected rule may comprise uploading at least part of the item to another software application on a second data network (that may be identical to the first data network). The feature "processing the item independently of the first software application", introduced above, means that the processing is independent of the processing options provided within the first software application. As a result, the processing is independent of whether the item is supplied using, e.g., e-mail, SMS, Instant Messaging (IM), etc., or using HTTP, SMTP, SOAP, FTP, POP3, or another application layer protocol. As to POP3, this protocol is used by an e-mail client to retrieve e-mails from the associated e-mail box at the e-mail server. In this case, e-mails addressed to a specific client are first sent to a server. In the invention these e-mails arc retrieved using POP3 on behalf of the addressee in order to have them processed according to the invention. Therefore, a server carrying out the method of the invention may have at its receiving interface both servers and clients for obtaining the items via the first data network.

It is even possible that different first software applications, used in the delivery of the items, use the same application layer protocol. For example, an authorized SOAP interface application for receiving data items and an unauthorized HTTP server both use HTTP as the application layer protocol.

In an embodiment of the invention, the attribute comprises an identification of a sender of the item. The rule base includes, for example, a rule that specifies that items received from a particular sender be deleted automatically, and another rule that specifies that items received from another particular sender be automatically forwarded to the user's website for being published, and yet another rule that specifies that items sent by still another sender cause notifications to be immediately forwarded to the user's mobile phone.

In another embodiment, the attribute is an indication of the presence of an image file in the item. A specific rule may then be to upload the image to a photo sharing website such as "Flickr". "Flickr" is an example of an online community platform. Within this context, reference is made to social networking websites or online social networking services that support the building and maintenance of social networks through a data network such as the Internet. These sites and services form an onlinc-community platform. A social network within this context can also be described as, e.g., a social structure of individuals or organizations that are tied together by means of a social relationship. Some examples of social networking websites and social networking services are the following. "MySpace" and "Hyves" arc social networking websites that let users share photos, journals and interests. "Del.icio.us" is a social web service for storing, sharing and discovering web bookmarks. "Picasa Web Albums" and "Flickr" are photo-sharing web sites. "Last.fm" is a community website dedicated to Internet radio and music. Above examples indicate that an individual user may be a member to many online communities and that there are many different communities available to join. The processing of the item is not limited to applications involving social networks. Accordingly, based on the attribute (or attributes) identified, the processing includes, e.g., sending the item as an SMS to the user's telephone, sending the item as an e-mail to the user's e-mail address or to an acquaintance, storing the item on a particular device or in a particular file, posting the item as a page or in a page on the user's web-site, etc. The user can specify in the rule base to what software applications which items (or which parts thereof) have to be uploaded and under what conditions.

In another embodiment, the attribute comprises a URL. For example, the user is addressed in an e-mail message or instant message from a certain party, and the message comprises a URL in a dominant region, e.g., in the text body and not in an e-mail banner specifying the party's contact information and website. An applicable rule in the rule base may then be to process the item by stripping this URL and uploading the URL to the "Del.icio.us" web site, mentioned above.

Other embodiments relate to the attribute comprising indications of, e.g., an audio file, one or more specific keywords in the item's accompanying text, one or more tags having specific characteristics, time of the day of receipt, etc.

The processing can be controlled by invoking a combination of multiple rules applicable to one or more of the item's attributes. For example, if the data item is supplied by one of a plurality of parties appearing on a list prepared in advance, and if the item's attribute comprises an image, and if this image has been tagged or otherwise described in an accompanying context as relating to pre-war Bentleys, then an electronic notification about this item is to be sent to the user/addressee via SMS or e-mail, and the image is to be stored at the user's home network or forwarded to his/her mobile telephone, unless the item was sent by a specific party in case the item is to be discarded. Boolean logic or fuzzy logic can be applied to control the processing based on a combination of the user's registered preferences as represented by the rule base.

In other words, the invention relates to a network service for automatically processing a data item, addressed to a user, under control of rules specified by the user. The service is configured to process the item regardless of the protocol used by the supplier of the item and independent of the application used at the supplier side to deliver the item. Accordingly, someone can send an item to a server maintained by this network service. The server plays the role of proxy server of the user addressed in the item. The proxy server stores the item and identifies one or more attributes of the item. The attributes include, e.g., the name of the sender, the type of content information (e.g., image, video, audio, text, etc.), time of the day of receipt at the proxy server, other addressees in the same item, size of the item, format, native application used to send the item (e-mail, instant messaging, etc.). The proxy server stores a set of rules, e.g., pre-specified by the user. The attributes identified invoke one or more specific rules according to which the proxy server processes the item: e.g., forwarding, uploading, deleting, storing, etc.

The invention also relates to a data processing system for processing a data item. The system comprises: a first interface for receiving the item via a data network from a first software application; an analyzer for identifying an attribute of the item; a storage comprising a rule base; and a data processor for selecting a rule from a rule base based on the attribute identified, for processing the item according to the selected rule independently of the first software application. Preferably, the system has a second interface for uploading at least part of the item via a second data network to another software application. Preferably, the system provides a user interface for enabling to specify at least part of the rule base.

The invention also relates to software for installing on a server for implementing an automatic processing of a data item. The software comprises: first instructions for receiving the item via a first data network from a first software application; second instructions for identifying an attribute of the item; third instructions for selecting a rule from a rule base on the basis of the attribute identified; and fourth instructions for electronically processing the item according to the selected rule and independently of the first software application. Preferably, the software comprises fifth instructions for providing a user interface for enabling to specify at least part of the rule base.

Accordingly, the invention can be commercially exploited as a method or network service (service provider), as a system (set maker or manufacturer) and as software (software provider). It is clear to the skilled artisan that what is discussed herein with respect to one of the method, system and software, is applicable to the other instantiations of the invention.

### BRIEF DESCRIPTION OF THE DRAWING

The invention is explained in further detail, by way of example and with reference to the accompanying drawing, wherein is a block diagram of a system of the invention.

### DETAILED EMBODIMENTS

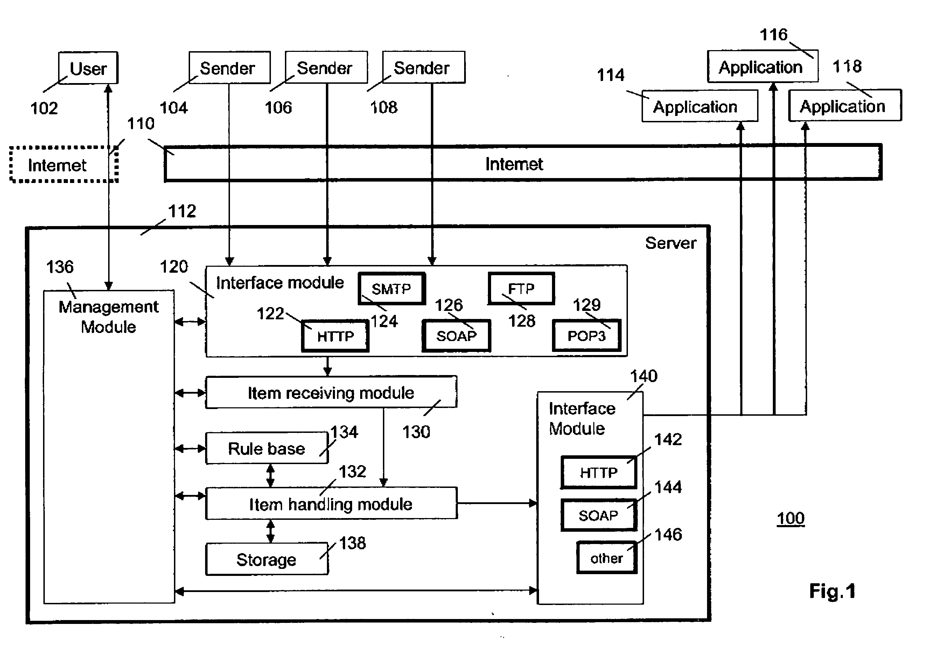

Fig.1 is a block diagram of a system 100 using the invention. System 100 enables a user 102 to control the manner wherein data items, supplied by senders 104, 106 and 108 via the Internet 110, are automatically processed at a server 112 for being subjected to software applications 114, 116 and 118. Individual ones of applications 114-118 may be running on individual servers (not shown) or on a single server (not shown). These servers or server can be a publicly accessible server(s) such as social networking services mentioned above, or a dedicated private server, or application servers on the Internet (e.g., an e-mail server), etc. The allocation of any of applications 114-118 to an item for operating thereon is independent of the protocol, e.g., HTTP, FTP, SOAP, SMTP, etc., used by the relevant one of senders 104-108 for supply of the item, and of the software application(s) at senders 104-108 to deliver the item, as is explained below. The independence is meant to provide to user 102 processing options that are independent of, e.g., not available within, the software applications used by senders 114-118. Each of senders 104-108 may be a human operator or another software application operating on behalf of a known party or service provider, etc. Each of senders 104-108 may be sending the item in response to a request from user 102 or may be initiating the communication independently, etc. Senders 104-108 supply the items via, e.g., e-mail, SMS, instant messaging (IM), HTTP, FTP, etc.

With respect to senders 104-108, user 102 may have different addresses on data network 110. In the example shown, user 102 has subscribed to a service on data network 110 that serves as a proxy of user 102 for receiving the items addressed to user 102.

Although server 112 communicates with senders 104-108 and software applications 114-118 via the same data network (here: the Internet) it is clear that in the invention server 112 can communicate with senders 104-108 via a first data network (or multiple first data networks), and with applications 114-118 via a second data network (or multiple second data networks), wherein the first and second networks are not connected, other than via server 112.

There are several ways to configure server 112 as a proxy of user 102. For example, server 112 contains an e-mail client which retrieves (using POP3) all e-mails from the user's e-mail box. As another example, server 112 contains an e-mail server itself and user 102 has his/her own e-mail domain at server 112, so that e-mails addressed to user 102 are directly sent to server 112. As yet another example, server 112 provides a web-service which can receive messages via SOAP. Still another example is that server 112 provides a web service that can receive data items from senders that use HTTP post. As a further example, server 112 has an FTP server to which a sender can upload data items using FTP, etc. For all available application protocols either a server or a client is implemented. Clients can retrieve the items from somewhere else (such as an e-mail client), whereas a server can receive directly. Reception or retrieval is either authenticated (i.e., the sender needs to authenticate him/herself before he/she can upload something), or un-authenticated which means that a sender does not need to authenticate him/herself before uploading/sending/posting something to the server. For all options, whether server or client, an address should be specified, such as an FTP site, a WEB-site, an e-mail address, a telephone number, etc. Note that content items are preferably not received at the user's home equipment as an intermediate station, as this would consume twice (both download and upload) the bandwidth> For example, a large photo goes directly to Flickr, and only a notification goes to the user's mobile telephone phone, so that the user does not consume the bandwidth to home and back to the Flickr application on the Internet.

Sender 104 supplies a first data item of electronic content information, addressed to user 102, and uses, e.g., the HTTP protocol. Sender 106 supplies a second data item, addressed to user 102, and uses, e.g., the SMTP protocol. Sender 108 supplies a third data item, addressed to user 102, and uses, e.g., the SMTP protocol. Other senders (not shown) may be using the FTP protocol or other application layer protocols.

Server 112 has an interface module 120 configured for receiving the data supplied over data network 110 under predefined protocols and originating from various software applications as in the example above. To this end, interface module 120 has several clients and servers, e.g., an HTTP server 122, an SMTP server 124, a SOAP server 126, an FTP server 128, ..., and, e.g., a POP3 client 129. Server 112 has a data item receiving module 130 that analyzes the data items received via interface module 120 and identifies one or more attributes of each item received. An attribute is relevant for allocation of the item or a portion of the item to one or more of applications 114-118. In principle, any feature in the item can be used as an attribute for control of the allocation, so long the feature is interesting to user 102 in order to determine how the item is to be processed. A feature can be part of the content information itself, e.g., file format, keywords, color distribution in an image, rhythm in an audio clip, etc., or part of the message carrying the content information item, e.g., source of the message, name of the sender, date or time of the sending, etc. The allocation is described further below.

Examples of attributes are the presence of text, an image, a video clip, a sound clip. These features can be identified based on, e.g., their file extensions. Another example is a URL that is identified when given in a text, based on its format (e.g., "www.domain.com"). Technology for this kind of identification is known in the art, e.g., based on meta-information which is typically application-dependent. For analyzing and categorizing audio see, e.g., US patent 6,519,564, issued to Mark Hoffberg and Yevgeniy Shteyn and herein incorporated by reference. For analyzing and categorizing images, see e.g., US patent 6,226,636, issued to Mohamed Abdcl-Mottaleb and Santhana Krishnamachari and herein incorporated by reference. User 102 may specify in the rules in rule base 134 that different images be processed differently, e.g., allocated to different ones of applications 114-118, based on the images categories. Similarly, user 102 may specify that different categories of audio files received be processed differently. The user may also specify in at least part of the rule base to which one of applications 114-118 on data network 110 at least part of the item is to be selectively uploaded. For clarity, only a single user 102 has been drawn. Clearly, system 100 may serve a plurality of users. Each individual one of the users may specify different rules in rule base 134 for the different processing of the items addressed to this individual user.

Yet other examples of attributes that may be relevant here arc the identifier of the sender of the item, the time and day on which it was received, the size of the item, or other details of the descriptive information characterizing an aspect of the item, whether the item was sent to other addressees, whether the item contains a description of its intended destination (e.g., for your web-site), the application protocol used, the presence of special symbols such as the symbols for the US dollar, the Euro or the British pound, the language of the text, the type of the file of the item, and so on. Items uploaded to applications 114-118 may include web pages, e.g., in HTML. Useful (within the context of the invention) attributes of these items include, e.g., the HREF attributes (hypertext reference attributes to a URL): "mail-to", "phone-to", "link-to" (a hyperlink to another page, object or file), but also the presence of, e.g., java-script or another piece of code in the Web page. Other examples of attributes that can be used for the selective allocation of items are related to the device (not shown), e.g., the type of the handset-type (brand, model type) in case of a mobile communication device, of one or more of senders 104-108: the IP address of the relevant sender, the UserAgentString of the sender, the offset with respect to the standard time (Greenwich Mean Time or:GMT). As to the latter example, Pacific Standard Time (PST) has an offset of minus eight hours with respect to GMT, and Central European Time (CET) has an offset of plus one.

Server 112 comprises a data item handling module 132 that determines how to process the item received, or one or more portions thereof, under control of a rule base 134. Rule base 134 stores rules that are selectively invoked based on the specific attribute(s) that module 130 has identified in the item received. The rules in rule base 134 are determined in advance or can be dynamically modified or established through a management module 136 during operational use of system 100 by user 102. In an embodiment of the invention, module 136 provides a suitable user interface (UI) to user 102 via the Internet 110, for enabling the user to specify or modify, or otherwise determine, the rules according to which he/she desires to have items of content information processed. The user can thus configure system 100. For example, some rules could be activated or inactivated by the user checking-off certain options in check boxes in the UI in the configuration phase. In addition, or alternatively, the user can specify, during the configuration, in a text dialog which types of items he/she wants to go to which one(s) of applications 114-118 on the basis of the attributes of the items.

Instead of selecting one or more of applications 114-118 for processing the content information item, rules may be included in rule base 134 that specify that under certain conditions the content information item is to be deleted. Some rules may also specify that under specific conditions, user 102 is to intervene manually in order to control the handling of the relevant content information item. The latter may be the default rule in case rule base 134 does not have rules available that determine to which one of applications 114-118 certain items received are to be forwarded. The default rule may also be invoked if the user-specified rules as applied to the relevant item do not lead to a decision of how to allocate or otherwise process the item. For example, if the user has specified a rule saying that all items must be deleted if no other rule applies then there is always a rule that is applicable and leads to a processing decision. However, consider the scenario wherein there have been specified rules only of the form: if the item has an attribute A, then process the item according to procedure 1; if the item has an attribute B, then process the item according to procedure 2, etc. In this scenario, items without an attribute A and without an attribute B cannot get automatically processed in the system of the invention. Such items need to be processed manually by the user. Therefore, it is advisable to have a process in place, e.g., implemented by the service provider, to handle those items to which no rules apply. An examples of this process is that items to which no rule applies, or for which no unambiguous decision can be reached automatically when applying the rules, are stored on behalf of the user in a dedicated storage for a certain time period (e.g., ten days) and such item is deleted if the time period ahs elapsed. Another example is that such items are stored in a dedicated storage so long as the storage capacity, allocated to this user, has not reached its maximum (e.g., 10 Gb). Stored items are overwritten/deleted if the storage capacity is fully used, (e.g., on a first-in-first-out basis, or largest stored items are deleted first to make available storage space for newly arrived items, etc.). It is clear that items that cannot be processed according to rule base 134 should preferably not block the reception and processing of new items addressed to user 102. The user can have specified in rule base 134 that in none, in some, or in all cases he/she has to be notified that user intervention is required. Items that cannot be allocated to applications 114-118 and that have not been considered by the user for manual allocation or for other processing may be held in storage 138 for some time before being overwritten automatically. Within this context, the user can have rules invoked that specify, e.g., to delete everything after a certain time, to maintain everything in a certain file for a certain time period. For example, a compound rule may be that during holidays, all items received are to be stored, apply relevant rules but wait for uploading the items to applications 114-118 until after the user has approved of the uploading.

Note that user 102 may also assume the role of sender of items, e.g., sender 104, for allocation of his/her items among applications 114-118 according to the rules in rule base 134 applicable to this individual user.

As an example of rule based processing, consider the following. If a data item is received from sender 108, the item is to be discarded; if the item is from sender 106, then the item is to be uploaded to the personal website of user 102 ("MyWebSite"); if the item is a picture photograph, then the item is to be uploaded to "Flickr". If the item being analyzed mentions something about pre-war Bentleys, user 102 is to be notified immediately at his/her network address or his/her mobile telephone number as specified in the relevant rules, invoked by the occurrence of Bentley-related terms or Bcntley-related other features in the item analyzed by module 130, etc.

Item handling module 132 may also take care of other operations in addition to allocating the item to one or more (or none) of applications 114-118. Module 132 may take care of format conversion, e.g., converting a text document to a pdf file or a tif image to a jpeg image, etc., before uploading items to applications 114-118 if the items need to have a standard format for one or more specific ones of applications 114-118. Module 132 may also carry out a modification of the substance of item as received at server 112 from one or more of senders 104-108. For example, module 132 is instructed by user 102 to strip away the e-mail headers and c-mail banners before uploading the e-mail to a specific one of applications 114-118. Within this context see, e.g., US patent 6,563,913 issued to Leila Kaghazian and incorporated herein by reference.

The rules in rule base 134 may also include per user the authentication credentials necessary for server 112 in order to upload an item to relevant one(s) of applications 114-118 on behalf of this particular user. Such credentials may include username and password per individual user and are stored securely at server 112. Also, credentials for senders 104-108 may need to be configured in server 112 if authenticated uploading or authenticated retrieval is required to one or more of applications 114-118.

Server 112 has an interface module 140 with suitable clients, e.g., clients 142 ,144 and 146, for selectively forwarding, sending or uploading the item or its selected content constituent(s) to applications 114-118, e.g., Flickr, Picasa Web Albums, Hyvers, Del.icio.us, Last.fm, MySpace, MSN Live, YouTube, etc. Alternatively, or in addition, module 140 can issue a function call for interfacing with one of more of applications 114-118. In other words, module 140 behaves as a client for applications 114-118, but then without the corresponding user interfaces. For example, for the "Flickr" application, module 140 comprises a Flickr HTTP client that logs in into the Flickr website "www.flickr.com" as user 102. That is, the Flickr HTTP client uses the same username and password as user 102 him/herself would use for personally logging in. Then, the Flickr HTTP client places the photographs on the web-site, in the group "pre-war Bentleys" according to the relevant rules as described above. Accordingly, server 112 has assumed the identity of user 102. Functionally, an item received by server 112 has arrived at the recipient's (user) domain. As each of applications 114-118 has its own characteristics, interface module 140 is configured of one client per individual one of applications 114-118. Of course, protocol stacks and services can be re-used.

As to interface modules 120 and 140, each of applications 114-118, that are the eventual destinations of the items addressed to user 102, has in general an interface. This interface is used by the standard clients of the relevant application, i.e., when used without intervention by server 112. For example. "Flickr" has a web-interface for a browser. Some of applications 114-118 may also have an application program interface (API) which can be used to configure or otherwise program instantiations of interfacing clients 142-146 for the associated ones of application servers 114-118. Each of applications 114-118 needs, in principle, a different interface instantiation, as each of applications 114-118 has its own interface. Different interface instantiations can have the same application protocol. For example, module 140 comprises three different interfaces (clients) over HTTP, one to "Flickr", another one to "Hyves" and still another one to "YouTube". Fig.1 shows module 140 with only a single HTTP interface 142. In module 140, interfaces 142-146 have been adapted to the existing interfaces (or API's) of applications 114-118.

In above scenarios, user 102 interacts via the Internet 110 with server 112 that is managed by a service provider. Server 112 provides, for example, a portal to the Internet 110, thus facilitating the use that can be made of the proxy service. That is, the proxy service as implemented by server 112 could be a commercially attractive feature for having it implemented in a portal.

In another scenario, server 112 may reside on the user's home network, e.g., his/her PC or set-top box or at another device on the user's home network. Interaction between user 102 and management module 136 then does not need the Internet as interconnection. Of course, the Internet protocols can still be used on, e.g., a Local Area network (LAN). Similarly, one or more of applications 114-118 may also reside at the user's home network. Operations, however, remain the same in that allocation of items, received via the Internet, to one or more of applications 114-118, is independent of the application layer protocol used in receiving the items.

In a further scenario, one or more of applications 114-118 are further services similar to the one provided by server 112. That is, one can concatenate several servers of the type of server 112 for allocating data items to dedicated destinations. Server 112 is then to perform a coarse allocation or filtering based on the rules in rule base 134. The next server, e.g., functionally equivalent to application 114, then carries out a finer-grained allocation or filtering of particular items that were allocated to application 114 by server 112. This next server then has a further rule base for control of the selective forwarding of the particular items to one or more other applications. In this manner a server structure can be configured, wherein user 102 is a professional party providing a dedicated network service, categorizing electronic content information items by means of selectively allocating them to dedicated applications under control of pro-specified rules. For example, professional party 102 sends out web-crawlers that upload, as senders 104-108, to server 112 specific items complying with the crawlers' built-in criteria. Based on the rules in rule base 134, server 112 then categorizes the items thus received and selectively allocates them to applications 114-118. In this manner, a topical, or another taxonomic, service can be implemented. Within this context see, e.g., US patent 6,349,307 issued to Doreen Cheng and incorporated herein by reference.

The invention is specifically interesting to a user of a thin-client or network-enabled mobile device, e.g., a mobile telephone, using limited bandwidth and having limited compute power. Proxy server 112 then handles all items addressed to this user, and the user manages the allocation of thcsc items via the user interface of his/her mobile device and via management module 136 and rule base 134. The mobile device itself therefore does not need to receive and process the items addressed to this user. The user can have specified in his/her rule set in rule base 134 that he/she is to be notified via his/her mobile device when particular items have been received and processed by server 112.

Applications 114-118 may change or grow less interesting to particular users over time. Accordingly, server 112 may keep track of what items have been allocated to which ones of applications 114-118 per individual user so as to be able to allocate items to new applications or to re-distribute them among existing applications 114-118 according to new rules specified by the individual user and included in rule base 134. Copies of these items may then be saved at server 112 or at a storage under control of server 112 for these purposes. For example, some or all of applications 114-118 may allow that user 102 pulls items, previously uploaded, from the relevant one(s) of applications 114-118, so that user 102 may re-distribute them according to newly formulated or currently applicable rules. As another example, user 102 may specify through rule base 134 that all items that previously were uploaded to Flickr over the last six months must be uploaded to Picasa. As yet another example, user 102 specifies through rule base 134 that all items, which have been copied under control of server 112 and which also comply with particular rules, be uploaded to application 118 (e.g., movies smaller than a pre-defined size are uploaded to YouTube).

In the example illustrated, server 112 communicates with senders 104-108, applications 114-118 and user 102 via data network 110. In another example, server 112 communicates with senders 104-108 via a first data network, with application 114 via a second data network, with applications 116-118 via a third data network and with user 1023 via a fourth data network. These first, second, third and fourth data networks need not be the same data network, but can be different networks with different communications protocols, different infrastructures, different accessibility rights, etc. For example, applications 114-118 are accessed via a private LAN of the service provider managing sever 112, whereas senders 104-108 communicate with server 112 via the Internet, or sender 104 uses SMS over GSM, sender 106 uses UMTS and user 108 uses GPRS over GSM.

The invention is also interesting to non-savvy users of PCs or other network-enabled devices such as set-top boxes. The invention delegates the managing of data items to proxy server 112, and lets the user enjoy the items without having to interact through a cumbersome user interface.

System 100 has been discussed as an example of a system in the invention. Components 120-146 have been drawn as accommodated on a single server 112. In another example of the invention, some or all of components 120-146 are distributed among two or more servers (not shown) interconnected, and cooperating, via data network 110. A distributed or modular configuration makes the system less vulnerable to, e.g., hacking or failures, as each of the components can be optimized for its dedicated task, independently of the other components. For this purpose, interface module 120, receiving module 130 and management module 136 can be accommodated at a first server, whereas components 120-146 minus interface module 120, minus receiving module 130 and minus management module 136, can be accommodated at a second server. The first server can be formed by two servers operating in parallel and all data can be replicated so as to minimize content loss. Other configurations are possible each with its own advantages with respect to, e.g., ease of maintenance, security and reliability.

## Claims

1. A method of automatically processing a data item wherein the method comprises:
receiving the item via a first data network from a first software application;
identifying an attribute of the item;
based on the attribute identified, selecting a rule from a rule base; and
electronically processing the item according to the selected rule and independently of the first software application.

2. The method of claim 1, wherein the processing according to the selected rule comprises uploading at least part of the item to another softwafe_application on a second data network.

3. The method of claim 1 or 2, wherein:
the received item is addressed to a specific user; and
the processing is specific per specific user.

4. The method of claim 1, 2 or 3, wherein:
the received item is addressed to a specific user; and
the processing according to the selected rule comprises notifying the specific user of the receipt.

5. The method of claim 1, wherein the attribute comprises at least one of the following:
an indication of a sender of the item;
an indication that the item includes an image file;
an indication that the item includes an audio file;
a URL;
an indication of the time of receiving the item;
a specific keyword in a text included in the item;
an indication that the item has a specific file format; and
a size of the item.

6. The method of claim 1, 2, 3, 4 or 5, comprising providing a user interface for enabling to specify at least part of the rule base.

7. The method of claim 6, wherein:
the processing according to the selected rule comprises uploading at least part of the item to another software application on a second data network; and
the specifying at least part of the rule base comprises specifying the second software application for selective uploading of at least part of the item.

8. The method of claim 1,2, 3, 4, 5, 6 or 7, wherein the first data network equals the second data network, and wherein the method is provided as a service on the first data network.

9. A data processing system for processing a data item, wherein the system comprises:
a first interface for receiving the item via a first data network from a first software application;
an analyzer for identifying an attribute of the item;
a storage comprising a rule base; and
a data processor for selecting a rule from a rule base based on the attribute identified, for processing the item according to the selected rule and independently of the first software application.

10. The system of claim 9, having a second interface for uploading at least part of the item via a second data network to another software application on the second data network.

11. The system of claim 9 or 10, providing a user interface for enabling to specify at least part of the rule base.

12. The system of claim 11, having a second interface for uploading at least part of the item via a second data network to another software application on the second data network, wherein the user interface enables to specify the other software application for selective uploading of at least part of the item.

13. The system of claim 9, 10, 11 or 12, configured for receiving respective items for respective ones of multiple users, wherein the processing is specific per specific one of the multiple users.

14. Software for installing on a server for implementing an automatic processing a data item, wherein the software comprises:
first instructions for receiving the item via a first data network from a first software application layer protocol;
second instructions for identifying an attribute of the item;
third instructions for selecting a rule from a rule base on the basis of the attribute identified; and
fourth instructions for electronically processing the item according to the selected rule and independently of the first software application.

15. The software of claim 14, comprising fifth instructions for providing a user interface for enabling to specify at least part of the rule base.

16. The software of claim 15, having sixth instructions for uploading at least part of the item via a second data network to another software application on the second data network, wherein the user interface enables to specify the other software application for selective uploading of at least part of the item.

17. The software of claim 14 or 15 configured for having the server receive respective items for a respective one of multiple users, wherein the processing is specific per specific one of the multiple users.
